# DEMANDE DE BREVET EUROPEEN

(11) **EP 1 529 712 A1**
(43) Date de publication de la demande: **11.05.2005**
(21) Numéro de dépôt: 04105453.7
(22) Date de dépôt: 02.11.2004
(51) Int. Cl.: B62B 3/00

(54) **Panier multifonctionnel**

(30) Priorité: 07.11.2003 BE 200300608
(71) Demandeur: Falzone, Daniel, 1410 Waterloo (BE)
(72) Inventeur: Falzone, Daniel, 1410 Waterloo (BE)
(74) Mandataire: Gevers, François

(57) **Abrégé**

La présente invention se rapporte à un panier multifonctionnel (1) monté sur roulettes (2) et muni d'un couvercle (4) pivotant qui fait également office de tableau pour écrire.

## Description

La présente invention se rapporte à un panier, de préférence, métallique monté sur roulettes pour le stockage et le transport d'objets.

Des paniers montés sur roulettes sont utilisés pour le transport de marchandises à l'intérieur d'un magasin, par exemple d'alimentation.

Cependant, ces paniers montés sur roulettes n'ont qu'une seule fonction qui est d'y déposer des marchandises pendant le temps des courses, puis de les enlever du panier à roulettes pour les mettre dans un coffre de voiture ou pour les porter à la main.

Dans le cadre des entraînements sportifs pour lesquels un moniteur de sport a besoin de balles ou de ballons et de divers accessoires nécessaires à l'enseignement qu'il prodigue à ses élèves, il a généralement à sa disposition un panier ne présentant aucune caractéristique particulièrement adaptée à l'usage qui est fait du panier.

En effet, les paniers pour balles connus sont généralement fixes et il faut les soulever pour les déplacer. De plus, ils ont l'unique fonction de contenir des balles et le moniteur doit se faire aider par au moins deux personnes afin de transporter tous les accessoires dont il a besoin en plus dudit panier contenant les balles. Un moniteur souhaitant expliquer une tactique de jeu à ses élèves doit se munir d'un tableau ou écrire sur un bloc-notes qui est en général trop petit pour être utilisé avec un groupe de personnes. Un autre inconvénient des paniers existants est qu'ils se renversent aisément en déversant tout leur contenu de balles sur le sol.

Le but de la présente invention est de prévoir un panier qui fournit une assistance aux moniteurs de sport sans présenter les inconvénients décrits ci-dessus.

A cette fin, la présente invention prévoit un panier, de préférence métallique, monté sur roulettes, comportant au moins un compartiment quadrangulaire pour le stockage et le transport d'objets, et comportant un couvercle dont la surface plate et lisse est munie d'au moins une représentation graphique d'un terrain de sport.

Un premier avantage du panier de l'invention est qu'il est multifonctionnel puisqu'il permet le stockage et le transport aisé de toute une série d'accessoires en plus des balles ou ballons utiles à la pratique du sport concerné mais de plus, il est stable et grâce à son couvercle, le moniteur dispose d'un tableau sur lequel le terrain du sport pratiqué est représenté, de préférence de manière indélébile. Le moniteur peut écrire sur ledit couvercle pour expliquer une tactique de jeu, puis effacer ses inscriptions pour en refaire d'autres, ceci sans altérer la représentation du terrain de sport sur le couvercle. Le couvercle est de plus pivotant ce qui permet d'accéder aux balles déposées dans le panier pendant que les élèves pratiquent le sport en question et de le remettre en position horizontale dès que le moniteur désire donner des explications aux élèves à l'aide de dessins.

D'autres formes de réalisation du dispositif suivant l'invention sont indiquées dans les revendications annexées.

D'autres détails et particularités de l'invention ressortiront de la description donnée ci-après, à titre non limitatif avec référence aux dessins annexés

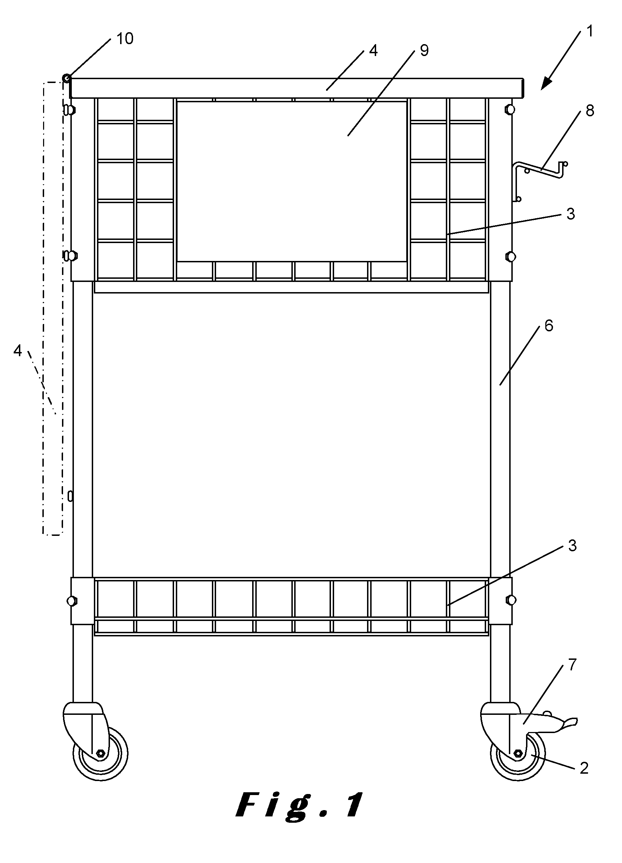

La Fig. 1 représente une vue de profil d'un panier multifonctionnel de profil selon la présente invention, avec son couvercle en position fermée.

La Fig. 2 représente un panier multifonctionnel selon la présente invention, avec son couvercle en position ouverte.

La Fig. 3 représente une vue aérienne d'un mode de réalisation préféré d'un couvercle du panier multifonctionnel selon l'invention.

Dans un mode de réalisation préféré, le panier 1 multifonctionnel de la présente invention a une forme rectangulaire dont la hauteur est comprise entre 70 cm et 1,20 m, la largeur est comprise entre 30 cm et 60 cm et la longueur est comprise entre 40 et 80 cm.

Ainsi, selon le sport pour lequel ce panier 1 est utilisé (tennis, squash, badminton, volley, handball, basket-ball, football et autres jeux de balle ou de ballon), il peut être adapté aux dimensions des balles ou ballons devant y être déposés.

De préférence, le panier 1 comprend deux compartiments 3 en aluminium qui sont superposés, le compartiment supérieur étant destiné à contenir jusqu'environ 300 balles de tennis. Le compartiment 3 supérieur peut également être divisé en deux sous-compartiments adjacents dont l'un a une contenance beaucoup plus faible que l'autre. Le plus petit des sous-compartiments étant utilisé pour y déposer, par exemple, une serviette, une bouteille de boisson ou d'autres effets personnels.

Le panier 1 multifonctionnel est monté sur quatre roulettes 2 dont deux sont, de préférence, munies d'un dispositif de blocage 7 afin de pouvoir disposer le panier 1 multifonctionnel de façon fixe à un endroit du terrain de sport.

Le compartiment 3 supérieur est également muni d'un crochet 8 sur sa face latérale externe de façon à pouvoir y accrocher des accessoires comme des raquettes, cerceaux, etc.

Un panneau d'affichage 9 peut également être apposé sur une des faces latérales externes du panier 1, au niveau du compartiment 3 supérieur ou du compartiment 3 inférieur afin d'y coller un message publicitaire d'un sponsor du club de sport utilisant ledit panier 1 multifonctionnel.

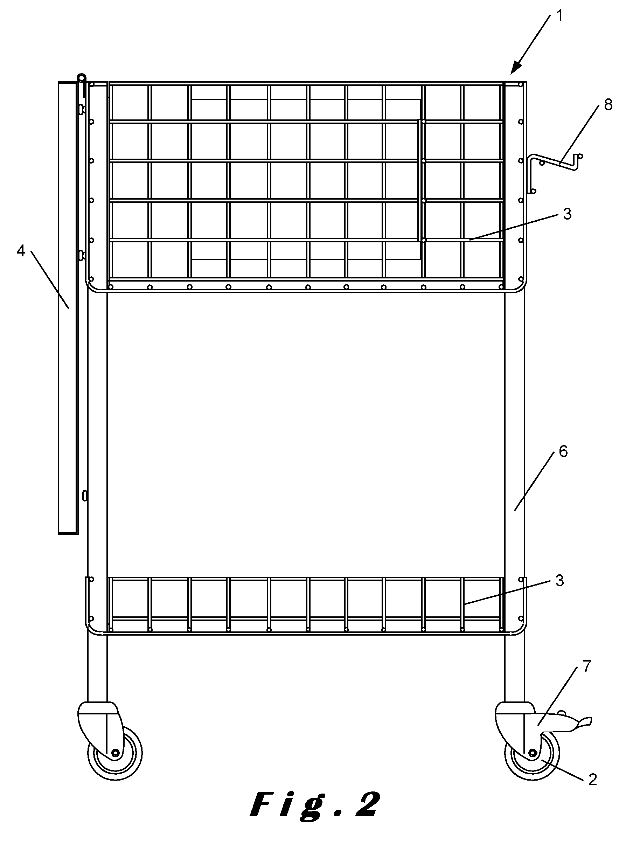

Le couvercle 4 du panier 1 multifonctionnel, qui fait office également de tableau lorsqu'il est en position fermée, peut pivoter grâce à une charnière 10 de façon à laisser le compartiment 3 supérieur entièrement ouvert, le couvercle 4 pouvant être rabattu le long des montants 6 du panier 1 multifonctionnel, comme il est illustré sur la Fig. 2.

Des pièces en matière souple sont disposées sur les montants 10 de façon à éviter les vibrations et bruits métalliques dus au contact entre le couvercle 4 et les montants 6 du panier 1 multifonctionnel. Le panier 1 multifonctionnel peut aussi être réglable en hauteur de façon à s'adapter à la taille de l'utilisateur, la hauteur préférée correspondant à celle qui permet à l'utilisateur de prendre des accessoires dans le compartiment 3supérieur sans devoir s'incliner.

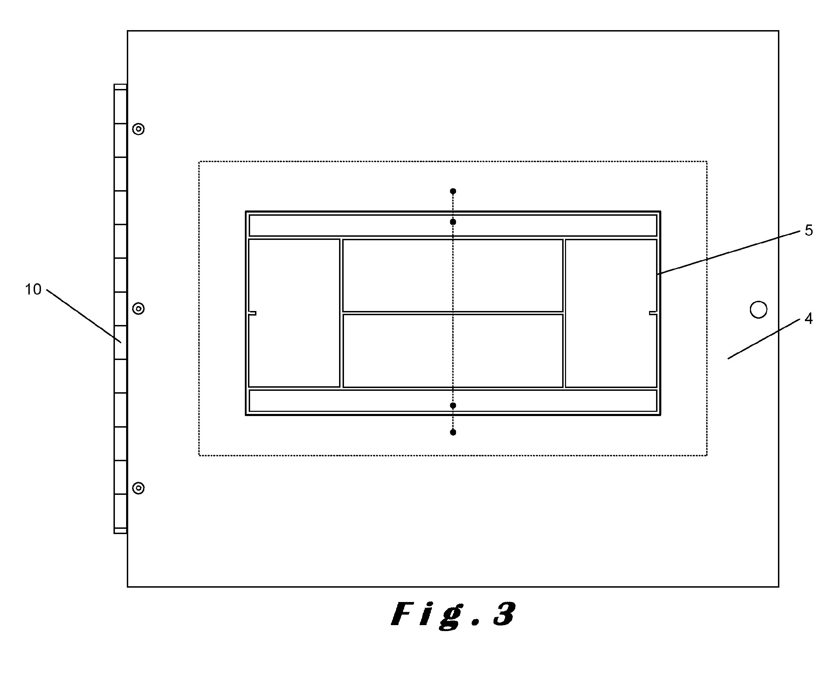

La Fig. 3 illustre un exemple de représentation graphique 5 de terrain de sport, en l'occurrence un terrain de tennis sur lequel le moniteur peut dessiner et effacer ensuite ses explications sans que cela ne laisse de traces, ni n'altère la représentation graphique 5 du terrain de tennis.

En position fermée, le couvercle 4 peut être verrouillé au moyen, par exemple, d'un cadenas. Ainsi, le moniteur peut laisser le panier 1 multifonctionnel sur le terrain sans craindre que les balles ne soient volées.

Le panier 1 multifonctionnel de l'invention peut également être muni de poignées afin de pouvoir le déplacer aisément dans des escaliers.

Ce panier 1 multifonctionnel joue donc un rôle important dans l'assistance à des moniteurs de sport, en particulier dans le cadre de leçons de tennis, mais d'autres sports sont également concernés, que cela soit des sports individuels ou par équipe, étant donné que les dimensions des différents éléments du panier peuvent être adaptées en fonction du sport pour lequel il doit être utilisé.

## Revendications

1. Panier (1), de préférence métallique, monté sur roulettes (2), comportant au moins un compartiment (3) quadrangulaire pour le stockage et le transport d'objets, **caractérisé en ce qu'**il comporte un couvercle (4) dont la surface plate et lisse est munie d'au moins une représentation graphique (5) d'un terrain de sport.

2. Panier (1) selon la revendication 1, **caractérisé en ce que** la représentation graphique (5) du terrain de sport est de préférence celle d'un terrain de tennis.

3. Panier (1) selon la revendication 1 ou 2, **caractérisé en ce que** le couvercle (4) est prévu pour constituer également un support d'écriture effaçable.

4. Panier (1) selon l'une des revendications précédentes, **caractérisé en ce que** le couvercle (4) est pivotant pour accéder aux objets disposés dans ledit panier.

5. Panier (1) selon l'une des revendications précédentes, **caractérisé en ce qu'**il comporte au moins deux compartiments (3) quadrangulaires disposés l'un au-dessus de l'autre et chaque compartiment (3) étant divisible en au moins deux sous-compartiments.

6. Panier (1) selon l'une des revendications précédentes, **caractérisé en ce qu'**au moins deux de ses roulettes (2) sont munies d'un dispositif de blocage (7).
